Europäisches Patentamt

European Patent Office

Office européen des brevets

(11) Publication number: **0 244 914**
**A1**

## (12) EUROPEAN PATENT APPLICATION

(21) Application number: **87200835.4**

(51) Int. Cl.⁴: **A01K 63/06**

(22) Date of filing: **06.05.87**

(30) Priority: **07.05.86 NL 8601167**

(43) Date of publication of application:
**11.11.87 Bulletin 87/46**

(84) Designated Contracting States:
**BE CH DE FR GB LI LU NL**

(71) Applicant: **Minireef B.V.**
**Korte Borgweg 13**
**NL-9607 PV Foxhol(NL)**

(72) Inventor: **De Haan, Lammert**
**Oudeweg 16**
**NL-9608 PM Westerbroek(NL)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) **An aquarium comprising an assembly of an aquarium receptacle and a removable fluorescent lighting device.**

(57) An aquarium comprising an assembly of an aquarium receptacle (4l) and a movable and removable fluorescent lighting device including one or more fluorescent lamps and electrical auxiliary appliances (l8, l9, 20) and wiring coacting therewith, and a removable housing for the electrical auxiliary appliances and the wiring enclosed, all around, by walls and to be placed within said receptacle. Said housing comprises a plurality of walls (l, 2, 3) permanently pertaining to said housing and being removable together therewith as well as a plurality of temporary walls (40, l3) which, when the housing is placed within the aquarium receptacle, are formed by coaction with the wall panels of the receptacle and/or auxiliary panels connected thereto. The electrical auxiliary appliances (l8, l9, 20) and the wiring therefor are mounted in the upper portion of the housing, preferably against the inside of the upper wall (l). Within said housing there is provided an overflow orifice (l4) formed in conjunction with the wall of the receptacle, so that the water level is maintained below the electrical auxiliary appliances (l8, l9, 20).

FIG.2

## An aquarium comprising an assembly of an aquarium receptacle and a removable fluorescent lighting device.

This invention relates to an aquarium comprising an assembly of an aquarium receptacle composed of a plurality of wall panels and one or more auxiliary panels connected to said wall panels, and a movable and removable fluorescent lighting device, including one or more fluorescent lamps and electrical auxiliary appliances coacting therewith and wiring therefor, as well as a removable housing for said electrical auxiliary appliances and the wiring enclosed, all around, by walls and to be placed within said receptacle.

A safe housing for the electrical auxiliary appliances, such as choke coils (inductive load) and starters of a fluorescent lighting device at the top of an aquarium receptacle is of particular importance. A first condition is that moisture should have no access thereto. This moisture may penetrate into said housing as a result of splashing, condensation or dripping from the cover plates of the aquarium. A second condition is that the heat from the choke coils can be dissipated by adequate ventilation. A third condition is that the fluorescent lamps should be situated directly above the aquarium water without separation by means of glass or synthetic plastics material. This latter is necessary to prevent loss of light output as a result of the glass or plastics material and the drops or dirt being deposited thereon. It is also necessary that the surface of the aquarium water can be ventilated for the supply of oxygen and the discharge of carbon dioxide. In connection with the various possible dimensions of an aquarium, it is desirable that one or more fluorescent lamps can be accommodated at the top of the aquarium in what can be called the light dome. In order that there may be sufficient access to the aquarium receptacle for maintenance and setting-up, the fluorescent lamps are disposed movably in the top portion of the light dome.

In one known embodiment, the ends of the fluorescent lamps are mounted in waterproof caps, the cords extending outwardly from the light dome, while at another location in the aquarium unit, e.g. underneath the receptacle, there is provided a housing for the electrical connection to starters and choke coils. This embodiment has the drawback that a great many cords project from the receptacle, which does not look good, while additional space is occupied by the appliances outside the aquarium. Such a construction cannot be offered as a complete system integral with the aquarium and induces hobbyists to connect electrical wiring themselves.

It is an object of the present invention to provide an aquarium of the above described type comprising a housing for the electrical auxiliary appliances such as choke coils, starters and wiring therefor, enabling said auxiliary appliances and wiring to be mounted within the aquarium receptacle in the light dome, thereby also meeting or not impeding the above indicated conditions.

The present invention is characterized in that the housing comprises a plurality of walls permanently pertaining to said housing and being removable together with said housing, as well as a plurality of temporary walls formed when the housing is placed within the aquarium receptacle by coaction with the wall panels and/or auxiliary panels.

According to a further embodiment of the present invention, wherein the removable housing, as viewed in the position in which it is placed within the receptacle, includes a bottom, two side walls, one upper wall and two end walls, the bottom and one of the side walls of the removable housing pertain to the temporary walls, while according to a preferred embodiment the electrical auxiliary appliances and the wiring therefor are mounted against the inside of the permanent upper wall of the removable housing. On removal of the housing according to the present invention, the electrical auxiliary appliances and associated wiring are thus removed along with it. Said auxiliary appliances, such as choke coils, starters and wiring, are excellently accessible for e.g. repair or replacement purposes, for which purpose the housing can be put upside down, as in its demounted condition the housing lacks the bottom and one side wall, which constitute a permanent part of the aquarium receptacle.

One embodiment of the present invention will now be described, by way of example, with reference to the accompanying drawings, in which:

Fig. I is a longitudinal section of a housing in mounted position within an aquarium receptacle;

Fig. 2 is a cross section of the housing on the line II-II of Fig. I; and

Fig. 3 is a view on the line III-III of Fig. I.

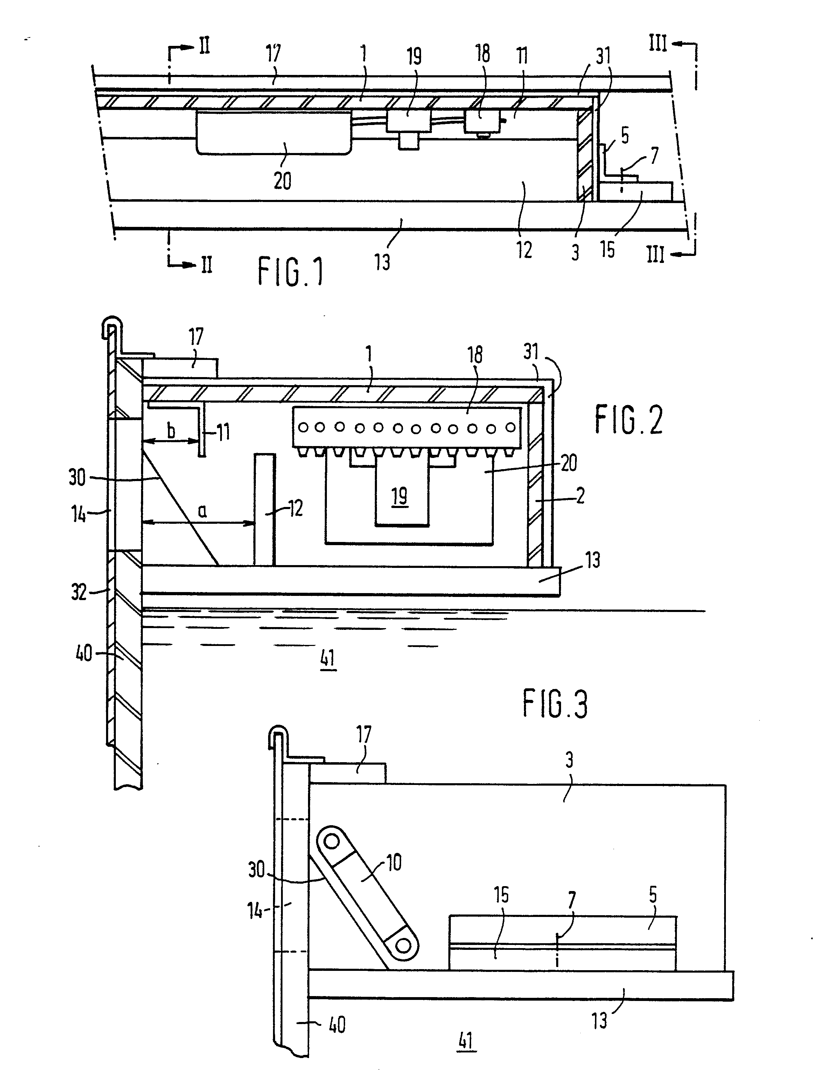

The embodiment of a housing according to the present invention shown in the drawings is composed of upper wall I, side wall 2 (Fig. 2) and front walls 3, which walls constitute the permanent walls of the housing and are made of glass strips glued together. The width of upper wall I may effectively be about 10 cm and the height of side wall 2 about 5 cm.

The front walls 3 each have a bevelled corner piece 30.

The permanent walls of the housing, i.e. upper wall l, side wall 2 and front walls 3, are covered on the outside, by gluing, with panels 3I of waterproof synthetic plastics material.

Glued against the exterior of the end walls 3 are corner sections 5 of synthetic plastics, which serve as supporting strips and have holes therein for receiving bolts 7. Moreover, cord clamps I0 are fitted against the exterior of front walls 3. Secured against the lower end of upper wall I are electrical mounting blocks, starters and choke coils I8, I9, 20.

Glued at right angles to side wall 40 (Figs. 2 and 3) of aquarium receptacle 4I in its upper portion are glass attachment strips I3, I7.

The upper portion of the walls of the aquarium receptacle 4I is also provided, all around, with a covering of synthetic plastics sheet material 32, while vent holes are provided in the portion of side wall 40 and the corresponding portion of the covering 32 of the aquarium receptacle situated between attachment strips I7 and I3. This portion of side wall 40 of the receptacle and the attachment strip I3 together constitute the temporary side wall or the bottom of the removable housing.

Protective strips II, I2 are provided for preventing direct access through vent holes I4 to the electrical auxiliary appliances in the housing (mounting block I8, starter I9 and choke coil 20). Strip II has the shape of a corner section made of a synthetic plastics material which is glued against the inside of the permanent upper wall I of the housing at an interspace $b$ from the side wall 40 of the aquarium receptacle. Strip I2 is made of a glass strip and also secured by means of gluing, in this case at right angles to the temporary bottom I3 of the removable housing, and at an interspace $a$ from the side wall 40. The height of the portion of strips II, I2 extending into the removable housing has been chosen in such a manner that the sum of said height is equal to the internal height of the housing. Moreover, the respective distances of strips I2 and I7 from side wall 40 are such that $a >$ $b$.

The permanent portion of the housing, as formed by upper wall I, side wall 2 and end walls 3, can be positioned as a unit so as to fit between attachment strips I7 and I3 and be fitted and secured by means of screws 7 via corner sections 5 and plastics blocks I5 glued to attachment strip I3.

The cords forming part of the wiring are passed outwardly via the space between side wall 40 of the aquarium receptacle and protective strip II, through the opening between the bevelled corner pieces 30 and side wall 40, and be secured by means of cord clamps I0.

The end portions of the fluorescent lamps, not shown, are mounted in waterproof caps and secured therewith to reflectors. The cord terminals are fused with the waterproof caps.

The advantages of the construction of the removable housing according to the present invention can be summarized as follows:
-when the aquarium is overfilled with water, the excess water flows off through the vent holes I4, and the electrical auxiliary appliances I8, I9, 20 and the wiring remain dry above the water level;
-thereis no access to the elecctrical auxiliary appliances and the wiring until after disassembly and removal of the housing from the aquarium receptacle by unscrewing screws 7 by means of tools;
-the inside of the permanent upper wall I of the housing is not accessible to splashing and dripping water;
-the heat from the choke coils is dissipated via the vent holes I4;
-the construction of the housing can be realized in various lengths in a simple manner according to the same basic principle and hence is suitable for connection of one or more fluorescent lamps;
-the entire housing is incorporated as a unit in the light dome, i.e. the upper portion of the aquarium receptacle, without inconvenient cords hanging out of the aquarium and without occupying much space, which would impede access to the aquarium.

Naturally, modifications can be made to the aquarium as discussed hereinbefore and as shown in the drawings without departing from the scope of the present invention. For instance, it is not necessary to design the protective strip I7 as a continuous strip, as it has no sealing function with respect to the housing.

Alternatively, it is possible, by adapting the wall dimensions of the housing, to secure the electrical auxiliary appliances and the wiring therefor against the inside of the permanent side wall.

## Claims

I. An aquarium comprising an assembly of an aquarium receptacle, composed of a plurality of wall panels and one or more auxiliary panels connected to said wall panels, and a movable and removable fluorescent lighting device comprising one or more fluorescent lamps and electrical auxiliary appliances coacting therewith and wiring therefor, as well as a removable housing for said electrical auxiliary appliances and wiring enclosed, all around, by walls, and to be placed within said receptacle, characterized in that the housing comprises a plurality of walls permanently pertaining to said housing and being removable together therewith, as well as a plurality of temporary walls formed when the housing is placed within the receptacle by coaction with the wall panels and/or auxiliary panels.

2. An aquarium as claimed in claim 1, the removable housing of which, as viewed in the position in which it is placed within the receptacle, includes a bottom, two side walls, one upper wall and two end walls, characterized in that the bottom and one of the side walls of said removable housing belong to the temporary walls.

3. An aquarium as claimed in claims 1-2, characterized in that the electrical auxiliary appliances and the wiring therefor are mounted against the inside of the permanent upper wall of the removable housing.

4. An aquarium as claimed in claims 1-3, characterized in that secured on the inside against a side wall of the aquarium receptacle, substantially at right angles thereto, and spaced apart from one another, are two sheet-like attachment strips, parallel to the bottom of said receptacle, the lower strip having a width sufficient to form the bottom of the removable housing and the portion of the side wall of the receptacle between said attachment strips being adapted to form the temporary side wall of the removable housing.

5. An aquarium as claimed in claim 4, characterized in that the side wall of the aquarium receptacle, situated between the upper and lower attachment strip, has one or more openings therein; that secured to the lower attachment strip, at an interspace $a$ from the side wall of the aquarium receptacle against which the lower strip is attached, is a first protective strip having a height less than the internal height of the removable housing, and secured against the inside of the permanent upper wall of the removable housing is a second protective strip at an interspace $b$ from the side wall of the receptacle against which the attachment strips are attached, with $a > b$, and with the height of the second protective strip being less than the internal height of the removable housing.

6. An aquarium as claimed in claim 5, characterized in that the sum of the heights of the first and second protective strips is at least substantially equal to the internal height of the removable housing.

7. An aquarium receptacle suitable for use as a component of the assembly pertaining to the aquarium as claimed in claims 1-6.

8. A removable housing comprising an upper wall, a side wall and two end walls, against the inside of the upper or side wall of which there are secured electrical auxiliary appliances and wiring for a fluorescent lighting device, suitable for use as a component of the assembly constituting the aquarium as claimed in claims 1-6.

9. A removable housing as claimed in claim 8, characterized in that the electrical auxiliary appliances and the wiring are attached to the inside of the upper wall.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 330 062 (RILEY) <br> * Whole document * <br><br> --- | 1 | A 01 K 63/06 |
| A | DE-A-2 528 124 (DOLPHIJN) <br><br> --- | | |
| A | GB-A-1 529 801 (STRICKLAND MC COURT) <br><br> ----- | | |

|  |  |  | TECHNICAL FIELDS SEARCHED (Int. Cl.4) |
|---|---|---|---|
|  |  |  | A 01 K |

The present search report has been drawn up for all claims

| Place of search | Date of completion of the search | Examiner |
|---|---|---|
| THE HAGUE | 13-08-1987 | VON ARX V.U. |